# EUROPEAN PATENT APPLICATION

(11) **EP 4 697 492 A1**
(43) Date of publication of application: **18.02.2026**
(21) Application number: 24913462.8
(22) Date of filing: 26.11.2024
(51) Int. Cl.: H01M 50/60, H01M 50/595, H01M 50/588, H01M 50/567, H01M 50/593, H01M 50/249, H01M 50/59

(54) **BATTERY, AND BATTERY PACK AND VEHICLE COMPRISING SAME**

(30) Priority: 27.12.2023 KR 20230193119; 05.02.2024 KR 20240017682
(71) Applicant: LG Energy Solution, Ltd., Seoul 07335 (KR)
(72) Inventor: KO, Kwang-Hun, Daejeon 34122 (KR); JANG, Hyeon-Sic, Daejeon 34122 (KR); JUNG, Sang-Suk, Daejeon 34122 (KR); JO, Min-Ki, Daejeon 34122 (KR)
(74) Representative: Goddar, Heinz J.
(86) International application number: PCT/KR2024/018893
(87) International publication number: WO 2025/143569

(57) **Abstract**

A battery according to an embodiment of the present disclosure may include: an electrode assembly; a battery housing configured to receive the electrode assembly through an opening formed on one side; a battery terminal electrically connected to the electrode assembly inside the battery housing by passing through a closed portion of the battery housing provided on a side opposite the opening, and configured to be bolt-fastened to the battery housing; and an insulating member interposed between the battery terminal and the battery housing.

## Description

### TECHNICAL FIELD

The present disclosure relates to a battery, and a battery pack and vehicle including the battery.

This application is based on and claims priority from Korean Patent Application No. 10-2023-0193119, filed on December 27, 2023, and Korean Patent Application No. 10-2024-0017682, filed on February 05, 2024, with the Korean Intellectual Property Office, the disclosure of which is incorporated herein in its entirety by reference.

### BACKGROUND ART

Conventional batteries have a terminal that is produced by forming a hole on the bottom of the can, inserting the terminal through the hole, and riveting the terminal to fix the same to the can.

This method of fixing the terminal to the can by causing the terminal to penetrate the bottom of the can and riveting the terminal inside the can is intended to maintain the riveted terminal in a plastically deformed state by riveting, thereby maintaining the structure and the sealing state around the terminal penetration area.

In this structure, if the rivet wing part (inner flange part) is deformed due to external load and changes in physical properties due to long-term exposure to the environment/electrolyte, there is a risk of leakage from the terminal penetration area. That is, in the riveting structure, the riveted terminal wraps the inner bottom surface of the can with the rivet wing part in one layer, so if force is applied to the rivet wing part that has already been deformed once during riveting, the rivet wing part is highly likely to be deformed again, and thus there is a risk of leakage.

Therefore, it is necessary to develop a structure capable of eliminating or reducing the risk of leakage caused by deformation of these terminal components.

### DISCLOSURE

### Technical Problem

The present disclosure is designed to solve the problems of the related art, and therefore the present disclosure aims to eliminate or reduce the risk of leakage in the area where the battery terminal is applied.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly; a battery housing configured to receive the electrode assembly through an opening formed on one side; a battery terminal electrically connected to the electrode assembly inside the battery housing by passing through a closed portion of the battery housing provided on a side opposite the opening, and configured to be bolt-fastened to the battery housing; and an insulating member interposed between the battery terminal and the battery housing.

The battery housing may have a terminal hole configured so that the battery terminal passes therethrough and having a first thread formed on its inner circumferential surface.

A second thread corresponding to the first thread may be formed on at least a portion of an outer circumferential surface of the battery terminal.

The terminal hole may be formed by burring processing.

The battery housing may include a housing flange extending along a circumference of the terminal hole and extending in a thickness direction of the closed portion of the battery housing.

The first thread may be formed on an inner circumferential surface of the housing flange.

The insulating member may be a tape wrapped around an outer circumferential surface of the battery terminal.

The battery may further include a current collector interposed between the closed portion and the electrode assembly and configured to be electrically coupled to the electrode assembly.

The battery terminal may be configured to be electrically coupled to the current collector.

The current collector may be configured to be bolt-fastened to the battery terminal.

The battery may further include an insulator interposed between the closed portion and the current collector.

The insulator may be configured to have a thickness corresponding to a width of a space between the closed portion and the current collector.

The insulator may be interposed in a compressed state between the closed portion and the current collector.

In another aspect of the present disclosure, there is provided a battery pack including a battery according to an embodiment of the present disclosure.

In another aspect of the present disclosure, there is provided a vehicle including a battery pack according to an embodiment of the present disclosure.

### Advantageous Effects

According to one aspect of the present disclosure, it is possible to eliminate or reduce the risk of leakage in the area where the battery terminal is applied.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating the internal structure of an upper portion of a battery according to an embodiment of the present disclosure.
FIG. 2 is a drawing illustrating the detailed structure of a terminal hole of a battery housing of the present disclosure.
FIG. 3 is a drawing illustrating the detailed structure of a battery terminal of the present disclosure.
FIG. 4 is a drawing illustrating a process of forming a terminal hole provided in a battery housing of the present disclosure.
FIG. 5 is a drawing illustrating a structure in which an insulating member is wrapped around an outer circumferential surface of a battery terminal of the present disclosure.
FIGS. 6 and 7 are drawings illustrating a bolt-fastening structure between a current collector and a battery terminal of the present disclosure.
FIG. 8 is a drawing illustrating an embodiment in which an insulator is interposed between a current collector and a closed portion of a battery housing in a battery of the present disclosure.
FIG. 9 is a drawing illustrating the internal structure of a lower portion of a battery according to an embodiment of the present disclosure.
FIG. 10 is a drawing illustrating a battery pack according to an embodiment of the present disclosure.
FIG. 11 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

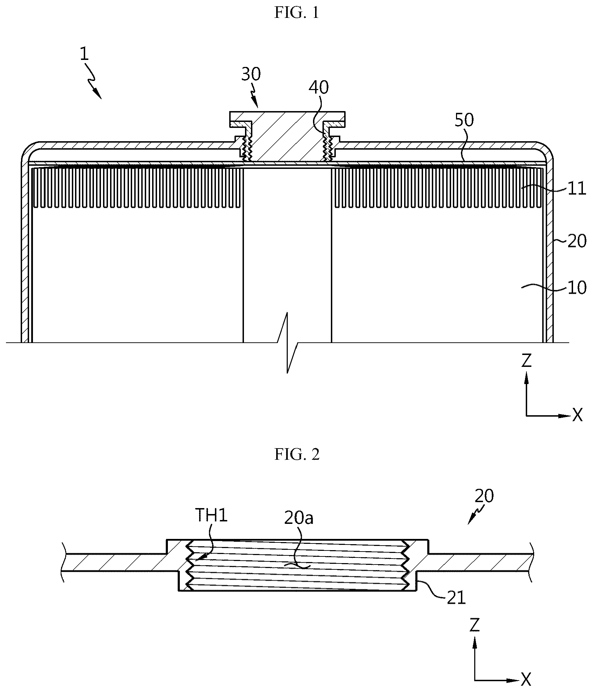

The structure of a battery 1 according to an embodiment of the present disclosure will be described with reference to FIGS. 1 to 5

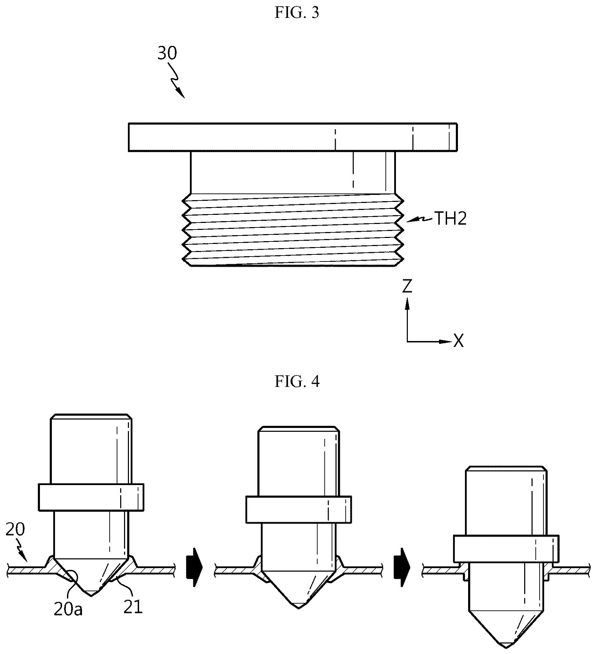

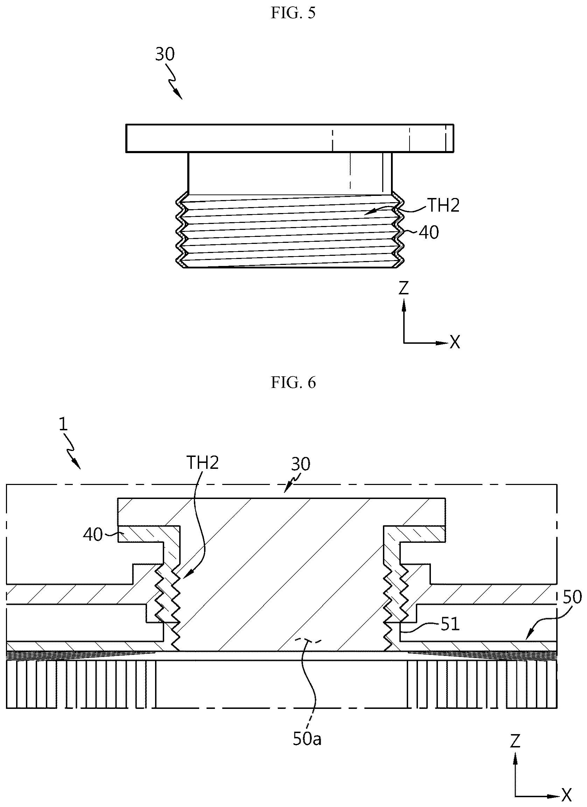

FIG. 1 is a drawing illustrating the internal structure of an upper portion of a battery according to an embodiment of the present disclosure. FIG. 2 is a drawing illustrating the detailed structure of a terminal hole of a battery housing of the present disclosure, and FIG. 3 is a drawing illustrating the detailed structure of a battery terminal of the present disclosure. FIG. 4 is a drawing illustrating a process of forming a terminal hole provided in a battery housing of the present disclosure, and FIG. 5 is a drawing illustrating a structure in which an insulating member is wrapped around an outer circumferential surface of a battery terminal of the present disclosure.

Referring to FIG. 1, a battery 1 according to an embodiment of the present disclosure may include an electrode assembly 10, a battery housing 20, a battery terminal 30, and an insulating member 40. The battery 1 may be a secondary battery. The battery 1 may be a cylindrical battery.

The electrode assembly 10 may include a first electrode, a second electrode having a polarity opposite that of the first electrode, and a separator interposed between the first electrode and the second electrode. The electrode assembly 10 may be, for example, a jellyroll-type electrode assembly obtained by winding a laminate including a positive electrode, a negative electrode, and a separator. The first electrode of the electrode assembly 10 may have a first uncoated portion 11 extending in the winding direction from one end thereof. The first uncoated portion 11 may be provided on a first surface of the electrode assembly 10. For example, the first uncoated portion 11 may extend in the upward direction of the electrode assembly 10.

The battery housing 20 may be configured to receive the electrode assembly 10 through an opening formed on one side thereof. The battery housing 20 may include a conductive metal. The above battery housing 20 may be electrically connected to the electrode assembly 10. An electrolyte may be accommodated together with the electrode assembly 10 inside the battery housing 20.

The battery terminal 30 may be configured to be electrically connected to the electrode assembly 10 inside the battery housing 20 by passing through a closed portion provided on the opposite side of the opening of the battery housing 20. The battery terminal 30 may be configured to be bolt-fastened to the battery housing 20.

The insulating member 40 may be interposed between the battery terminal 30 and the battery housing 20. The insulating member 40 may include an insulating material. The insulating member 40 may be a separate component interposed between the battery terminal 30 and the battery housing 20 so as to prevent the contact therebetween.

In this case, the insulating member 40 may include an elastic rubber material to maximize the leakage prevention effect in the area where the battery terminal 30 penetrates, in addition to the insulating effect. Alternatively, the insulating member 40 may be, for example, a tape wrapped around at least a portion of the battery terminal 30. Alternatively, the insulating member 40 may be, for example, a coating layer coated on at least a portion of the battery terminal 30.

Referring to FIG. 2, the battery housing 20 may be configured such that the battery terminal 30 passes therethrough and may have a terminal hole 20a having a first thread TH1 formed on its inner circumferential surface. In this case, the battery terminal 30 may have a structure corresponding to the terminal hole 20a so as to be bolt-fastened to the terminal hole 20a. Referring to FIG. 3, a second thread TH2 corresponding to the first thread TH1 provided in the battery housing 20 may be formed on at least a portion of the outer circumferential surface of the battery terminal 30. The battery terminal 30 may be bolt-fastened to the terminal hole 20a of the battery housing 20 through the first thread TH1 and the second thread TH2 having corresponding structures. Here, the bolt-fastening refers to a screw-fastening method of rotating the battery terminal 30 in one direction and inserting and fixing the same into the battery housing 20.

Meanwhile, referring to FIG. 4 in addition to FIG. 2, the first thread TH1 formed on the inner circumferential surface of the terminal hole 20a of the battery housing 20 may be formed by, for example, burring processing. As shown in FIG. 4, the hole 20a having a predetermined diameter may be formed by press-punching the closed portion of the battery housing 20 with a tool having a diameter corresponding to the diameter of the terminal hole 20a. Although not shown in the drawing, the first thread TH1 may be formed on the inner circumferential surface of the terminal hole 20a using a tool having a diameter corresponding to the diameter of the terminal hole 20a and having threads on the outer circumferential surface.

Meanwhile, the battery housing 20 may be provided with a housing flange 21. The housing flange 21 may extend along the circumference of the terminal hole 20a. The housing flange 21 may extend along the thickness direction of the closed portion of the battery housing 20. The housing flange 21 may be provided on the inner surface and/or the outer surface of the closed portion of the battery housing 20. The first thread TH1 may be formed on the inner circumferential surface of the housing flange 21.

As described above, in the case where the battery housing 20 is provided with the housing flange 21 and where the first thread TH1 is formed on the inner circumferential surface of the housing flange 21, the area where the first thread TH1 is formed may be greater than in the case where the housing flange 21 is not provided. Therefore, when bolting the battery terminal 30 to the battery housing 20, the area of the fastening portion may be increased, thereby improving the bonding strength. In addition, as the bonding area using the threads TH1 and TH2 is increased, the leakage prevention effect may also be greatly improved in the insertion portion of the battery terminal 30.

The housing flange 21 may be formed by the burring process described above. However, the present disclosure is not limited thereto, and in order to obtain the effect of improving the bonding strength and/or sealing force as described above, the housing flange 21 may be formed at the circumference of the terminal hole 20a through a separate process after processing the terminal hole 20a.

Referring to FIG. 5, the insulating member 40 may be a tape wrapped around the outer circumferential surface of the battery terminal 30. In this case, the tape may include, for example, a polymer insulator. The tape may be wrapped around the outer circumferential surface of the battery terminal 30 to have a thread having a shape corresponding to the second thread TH2 formed on the outer circumferential surface of the battery terminal 30. Alternatively, the assembly of the battery terminal 30 and the insulating member 40 may be rotated in one direction, while the tape is wrapped around the outer circumferential surface of the battery terminal 30, to be bolt-fastened to the battery housing 20, so that a thread having a shape corresponding to the second thread TH2 may be formed on the outer circumferential surface of the assembly of the battery terminal 30 and the insulating member 40.

Referring back to FIG. 1, the battery 1 of the present disclosure may include a current collector (first current collector) 50. The current collector 50 may be interposed between the closed portion of the battery housing 20 and the electrode assembly 10. The current collector 50 may be configured to be electrically coupled to the electrode assembly 10. The current collector 50 may be coupled, for example, to the first uncoated portion 11 of the electrode assembly 10. The current collector 50 may be electrically coupled to the battery terminal 30. The current collector 50 may be coupled to the battery terminal 30 fastened to the battery housing 20, for example, by welding inside the battery housing 20. The weld between the battery terminal 30 and the current collector 50 may be provided at a position that roughly corresponds to the central winding hole of the electrode assembly 10. In this case, it is possible to couple the battery terminal 30 to the battery housing 20, insert the assembly of the electrode assembly 10 and the current collector 50 through the opening of the battery housing 20 so that the current collector 50 and the battery terminal 30 come into contact, and then insert a welding tool or radiate a laser beam through the central winding hole of the electrode assembly 10 to perform welding.

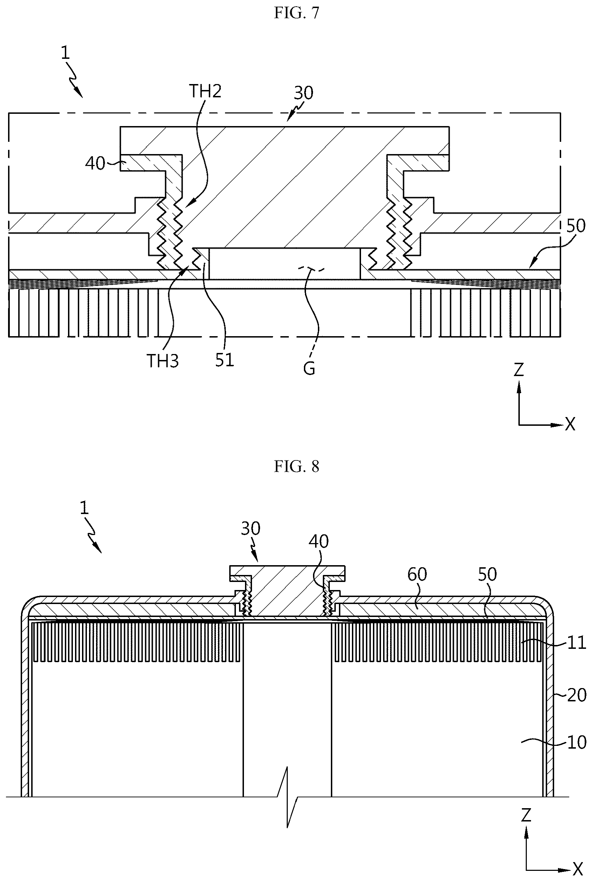

Next, a case where the current collector 50 and the battery terminal 30 of the present disclosure are bolt-fastened will be described with reference to FIGS. 6 and 7.

FIGS. 6 and 7 are drawings illustrating a bolt-fastening structure between a current collector and a battery terminal of the present disclosure.

Referring to FIGS. 6 and 7, the current collector 50 may be configured to be bolt-fastened to the battery terminal 30.

Referring to FIG. 6, the current collector 50 may have a current collector hole 50a formed at a position corresponding to the battery terminal 30. A thread having a shape corresponding to the second thread TH2 formed on the outer circumferential surface of the battery terminal 30 may be provided on the inner circumferential surface of the current collector hole 50a. Accordingly, the second thread TH2 formed on the outer circumferential surface of the battery terminal 30 may extend to an area corresponding to the inner circumferential surface of the current collector hole 50a. A current collector flange 51 may be provided on the circumference of the current collector hole 50a so as to extend in the thickness direction of the current collector hole 50a. In this case, a thread having a shape corresponding to the second thread TH2 may be formed on the inner circumferential surface of the current collector flange 51. The current collector flange 51 may increase the area where the thread is formed on the current collector 50, thereby making the bolt-fastening firmer.

Referring to FIG. 7, a receiving groove G may be provided on the lower surface of the battery terminal 30, that is, on the surface facing the current collector 50. A third thread TH3 may be formed on the inner circumferential surface of the receiving groove G. The current collector 50 may have a current collector flange 51 formed at a position corresponding to the receiving groove G of the battery terminal 30. A thread having a shape corresponding to the third thread TH3 may be formed on the outer circumferential surface of the current collector flange 51. Accordingly, the current collector flange 51 may be bolt-fastened inside the receiving groove G of the battery terminal 30.

As described above, in the case where the battery terminal 30 and the battery housing 20 of the present disclosure are bolt-fastened, and where the battery terminal 30 and the current collector 50 are bolt-fastened, the current collector 50 may act as a nut that prevents loosening of the bolt fastening between the battery terminal 30 and the battery housing 20. In addition, since the welding process for coupling the battery terminal 30 and the current collector 50 may be omitted, concerns about damage to the electrode assembly due to heat or interference by welding tools, which may occur during the welding process, may be resolved.

Next, a case where an insulator 60 is applied to the battery 1 of the present disclosure will be described with reference to FIG. 8.

FIG. 8 is a drawing illustrating an embodiment in which an insulator is interposed between a current collector and a closed portion of a battery housing in a battery of the present disclosure.

Referring to FIG. 8, the battery 1 of the present disclosure may include an insulator 60. The insulator 60 may be interposed between the closed portion of the battery housing 20 and the current collector 50. The insulator 60 may be configured to have a thickness corresponding to the width of the space between the closed portion of the battery housing 20 and the current collector 50. The insulator 60 may be interposed in a compressed state between the closed portion of the battery housing 20 and the current collector 50. As described above, if the insulator 60 is interposed in a compressed state, the loosening prevention effect of the bolt-fastening between the battery terminal 30 and the battery housing 20 and/or the bolt-fastening between the battery terminal 30 and the current collector 50 may be maximized. That is, the insulator 60 may perform the function of an elastic washer capable of preventing loosening of the bolt-fastening.

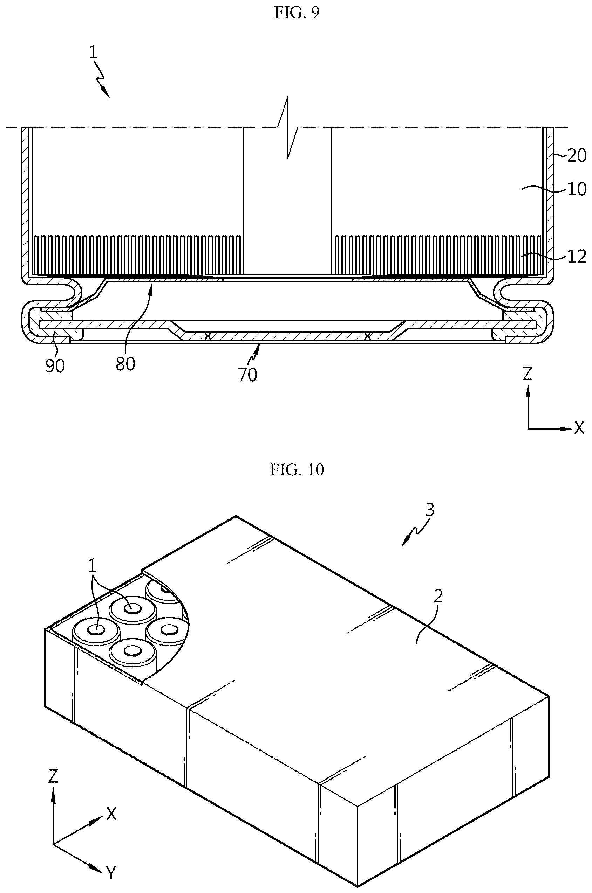

Next, the lower structure of the battery 1 according to an embodiment of the present disclosure will be described with reference to FIG. 9.

FIG. 9 is a drawing illustrating the internal structure of a lower portion of a battery according to an embodiment of the present disclosure.

Referring to FIG. 9, the battery 1 of the present disclosure may include a battery cover 70. The battery cover 70 may be configured to cover an opening formed on one side of the battery housing 20. The battery cover 70 may include metal. The battery cover 70 may have a venting portion. The venting portion may be an area configured to be more vulnerable than surrounding areas of the battery cover 70. For example, the venting portion may be an area having a smaller thickness than the remaining areas of the battery cover 70. The venting portion may be, for example, an area having notches on both sides. The venting portion may be configured to extend to form a closed loop surrounding the approximate center of the battery cover 70. The venting portion may be formed continuously or discontinuously. As described above, in the case where the battery 1 of the present disclosure has a venting portion, even if an abnormality occurs in the battery 1, the internal pressure of the battery 1 may be prevented from increasing above a certain level.

The battery 1 may include a current collector (second current collector) 80. The current collector 80 may be configured to electrically connect the second electrode of the electrode assembly 10 and the battery housing 20. The current collector 80 may be disposed on one surface of the electrode assembly 10. The current collector 80 may be electrically coupled to a second uncoated portion 12 of the electrode assembly 10. The second electrode of the electrode assembly 10 may have a second uncoated portion 12 extending in the winding direction from one end thereof. Accordingly, the second uncoated portion 12 may be provided on a second surface (the surface opposite the first surface on which the first uncoated portion is provided) of the electrode assembly 10. The second uncoated portion 12 may extend in the downward direction of the electrode assembly 10.

The battery 1 may include a sealing member 90 interposed between the battery cover 70 and the inner surface of the battery housing 20. If the sealing member 90 is provided, the current collector 80 may be interposed between the sealing member 90 and the inner surface of the battery housing 20.

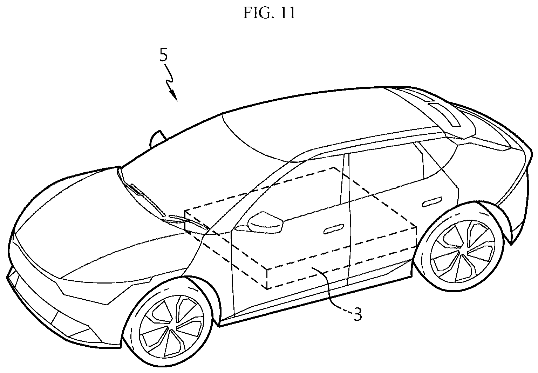

Next, a battery pack 3 and a vehicle 5 according to an embodiment of the present disclosure will be described with reference to FIGS. 10 and 11.

FIG. 10 is a drawing illustrating a battery pack according to an embodiment of the present disclosure, and FIG. 11 is a drawing illustrating a vehicle according to an embodiment of the present disclosure.

Referring to FIG. 10, a battery pack 3 according to an embodiment of the present disclosure may include at least one battery 1 of the present disclosure as described above. The battery 1 may be accommodated in a pack housing 2. The battery pack 3 may include components for electrical connection of the batteries 1 and/or a BMS (Battery Management System) configured to control charging and discharging of the batteries 1.

Next, Referring to FIG. 11, a vehicle 5 according to an embodiment of the present disclosure includes at least one battery pack 3. The vehicle 5 may be configured to operate by power supplied from the battery pack 3. The vehicle 5 may be, for example, a hybrid vehicle HEV or an electric vehicle EV.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

1: Battery
2: Pack housing
3: Battery pack
5: Vehicle
10: Electrode assembly
11: First uncoated portion
12: Second uncoated portion
20: Battery housing
20a: Terminal hole
21: Housing flange
TH1: First thread
30: Battery terminal
G: Receiving groove
TH2: Second thread
TH3: Third thread
40: Insulating member
50: Current collector (first current collector)
50a: Current collector hole
51: Current collector flange
60: Insulator
70: Battery cover
80: Current collector (Second current collector)
90: Sealing member

## Claims

1. A battery comprising:
an electrode assembly;
a battery housing configured to receive the electrode assembly through an opening formed on one side;
a battery terminal electrically connected to the electrode assembly inside the battery housing by passing through a closed portion of the battery housing provided on a side opposite the opening, and configured to be bolt-fastened to the battery housing; and
an insulating member interposed between the battery terminal and the battery housing.

2. The battery according to claim 1,
wherein the battery housing has a terminal hole configured so that the battery terminal passes therethrough and having a first thread formed on its inner circumferential surface.

3. The battery according to claim 2,
wherein a second thread corresponding to the first thread is formed on at least a portion of an outer circumferential surface of the battery terminal.

4. The battery according to claim 2,
wherein the terminal hole is formed by burring processing.

5. The battery according to claim 2,
wherein the battery housing comprises
a housing flange extending along a circumference of the terminal hole and extending along a thickness direction of the closed portion of the battery housing.

6. The battery according to claim 5,
wherein the first thread is formed on an inner circumferential surface of the housing flange.

7. The battery according to claim 2,
wherein the insulating member is a tape wrapped around an outer circumferential surface of the battery terminal.

8. The battery according to claim 1,
further comprising a current collector interposed between the closed portion and the electrode assembly and configured to be electrically coupled to the electrode assembly.

9. The battery according to claim 8,
wherein the battery terminal is configured to be electrically coupled to the current collector.

10. The battery according to claim 9,
wherein the current collector is configured to be bolt-fastened to the battery terminal.

11. The battery according to claim 10,
further comprising an insulator interposed between the closed portion and the current collector.

12. The battery according to claim 11,
wherein the insulator is configured to have a thickness corresponding to a width of a space between the closed portion and the current collector.

13. The battery according to claim 11,
wherein the insulator is interposed in a compressed state between the closed portion and the current collector.

14. A battery pack comprising a battery according to any one of claims 1 to 13.

15. A vehicle comprising a battery pack according to claim 14.
